Europäisches Patentamt

European Patent Office

Office européen des brevets

(11) Veröffentlichungsnummer: **0 269 788**
**A1**

(12) **EUROPÄISCHE PATENTANMELDUNG**

(21) Anmeldenummer: 87111445.0

(22) Anmeldetag: 07.08.87

(51) Int. Cl.⁴: **C21B 7/12**

(30) Priorität: 05.11.86 DE 3637720

(43) Veröffentlichungstag der Anmeldung:
08.06.88 Patentblatt 88/23

(84) Benannte Vertragsstaaten:
**AT BE DE ES FR GB IT NL SE**

(71) Anmelder: **RÜTGERSWERKE**
**AKTIENGESELLSCHAFT**
**Mainzer Landstrasse 217**
**D-6000 Frankfurt am Main 1(DE)**

(72) Erfinder: **Gardziella, Arno, Dr.**
**Rüdinghauser Berg 4**
**D-5810 Witten-Rüdinghausen(DE)**
Erfinder: **Schwieger, Karl-Heinz, Dr.**
**An der Stennert 43**
**D-5860 Iserlohn(DE)**
Erfinder: **Suren, Josef**
**Kirchweg 23**
**D-4798 Wünnenberg-Haaren(DE)**

(54) **Ungeformte, feuerfeste Massen.**

(57) Die Erfindung betrifft ungeformte, feuerfeste Massen, die z. B. zum Verschluß von Hochöfen Verwendung finden können.

Diese Massen enthalten als Bindemittel ein Gemisch aus einem Novolak und einem oder mehreren hitzereaktiven natürlichen Ölen.

EP 0 269 788 A1

## Ungeformte, feuerfeste Massen

Die Erfindung betrifft ungeformte, feuerfeste Massen, welche z. B. zum Verschluß von Hochöfen Verwendung finden können, wobei sie unter Temperatureinwirkung in kurzer Zeit zu einem festen Baustoff aushärten und dem im Ofen herrschenden ferrostatischen Druck Stand halten. Andererseits ist dieser Verschluß nach dem Aushärten noch so beschaffen, daß mit den entsprechenden maschinellen Einrichtungen beim Abstechen des Ofens der Verschluß gut geöffnet werden kann.

Derartige Massen sind aus DE-PS 27 23 792 bekannt, die mineralische Füllstoffe, organische Lösemittel, Reaktionsharze und 3 - 20 Gew.-% Destillations-und/oder Oxidationsrückstände aus der Dimethylterephthalat-Herstellung enthalten. Diese Massen sind preiswert, in weiten Temperaturbereichen lagerstabil, gleichmäßig plastisch, härten bei Temperaturen oberhalb 200 °C sehr schnell aus und haben einen hohen Verkokungsgrad. Diese Stichlochmassen haben allerdings den Nachteil, daß gerade aufgrund der hohen Reaktivität der Harzkomponente unter solchen Verarbeitungsbedingungen die Gefahr des vorzeitigen Hartwerdens oder Verlustes der Plastizität in der Stopfmaschine besteht, wo in der Stopfmaschine Temperaturen von 100 bis 180 °C auftreten können. Fernerhin besteht nur eine begrenzte Verfügbarkeit der als Rohstoff verwendeten Destillations-oder Oxidationsrückstände aus der Dimethylterephthalat-Herstellung.

Es ist daher Aufgabe der Erfindung, feuerfeste Massen bereitzustellen, die ein gleich gutes Eigenschaftsprofil haben wie die aus der genannten Schrift bekannten, die aber hinsichtlich ihres Reaktivitätsverhaltens und der Verfügbarkeit ihrer Rohstoffe weniger begrenzt sind.

Die Lösung der Aufgabe erfolgt durch ungeformte, feuerfeste Massen gemäß der Ansprüche 1 bis 9 und durch ihre Verwendung gemäß Anspruch 10.

Es wurde gefunden, daß sich ohne Qualitätseinbußen die in den Bindemitteln gemäß DE-PS 27 23 792 enthaltenen Rückstände aus der Dimethylterephthalat-Herstellung durch hitzereaktive natürliche Öle ersetzen lassen.

Derartige hitzereaktive Öle sind Öle, die mehrfach olefinisch ungesättigte Bindungen und verkokungsfähigen Kohlenstoff enthalten wie z. B. die natürlichen Öle Holzöl, Leinöl, Sojaöl, Ricinusöl. Das bevorzugte hitzereaktive Öl ist Cashewnuß-Schalenöl, das alleine oder im Gemisch mit anderen hitzereaktiven Ölen eingesetzt wird.

Es wurde weiterhin gefunden, daß ungeformte, feuerfeste Massen, die als Bindemittel Novolak und hitzereaktive Öle enthalten, bei Temperaturen oberhalb 200 °C auch dann rasch erhärten, wenn sie kein zusätzliches Härtungsmittel (wie etwa Hexa oder Phenolresol) enthalten.

Die erfindungsgemäß einzusetzenden Novolake werden erhalten durch Kondensation einer phenolischen Komponente mit einem Aldehyd, vorzugsweise Formaldehyd, oder einer unter Kondensationsbedingungen Aldehyd abspaltenden Verbindung in saurem Milieu. Als Phenolkomponente dient Phenol aber auch Kresole, Xylenole, längerkettige Alkylphenole, beta-Naphtol, 4,4-Dihydroxydiphenylmethan oder 2,2-Bis(4-hydroxyphenyl)propan, sowie Gemische dieser Phenole miteinander in beliebigem Verhältnis.

Das molare Verhältnis von Phenolkomponente zu Aldehyd liegt im Bereich von 1 : 0,2 bis 1 : 1,0.

Bei einem molaren Phenol-Aldehyd-Verhältnis im Bereich von 1 : 0,2 bis 1 : 0,5 werden niedrigschmelzende Novolake erhalten, die ohne Lösemittel eingesetzt werden können. Dies ist ein weiterer Vorteil der Erfindung, der die Umweltbelastung durch Lösemittel bei der Applikation der Massen reduziert.

Wird der Novolak gelöst, so werden bevorzugt Lösemittel mit einem Siedepunkt oberhalb 200 °C gewählt. Beispiele für derartige Lösemittel sind Diethylenglykol und höhersiedende Polyole, oberhalb 200 °C siedende Ester der Phtalsäure oder ähnliche Produkte. Der Novolakgehalt dieser Lösungen liegt im Bereich von 40 bis 90 %.

Der Anteil an Novolak im Bindemittel beträgt mindestens 20 %, der Anteil an Novolaklösung beträgt mindestens 50 %.

Als weitere Komponente können die erfindungsgemäßen Bindemittel auch Destillations-und/oder Oxidationsrückstände aus der Dimethylenterephthalat-Herstellung enthalten. Hier wurde überraschend gefunden, daß in der erfindungsgemäßen Kombination und den erfindungsgemäßen Massen diese Rückstände aus der Dimethylterephthalat-Herstellung den Novolak bis zu 50 % ersetzen können.

Die erfindungsgemäßen Massen enthalten neben einem Gesamtbindemittelanteil von 5 bis 20 Gew.-% mineralische Stoffe, die feuerfeste Eigenschaften besitzen, wie Quarzsand, Klebsand, Schamotte, Ton bzw. Tonerde, Magnesia, Siliciumcarbid und Korund und die als Stoffgemische mit 60 - 85 Gew.-% die feuerfeste Masse bilden. Als Kohlenstoffträgermaterial enthalten die feuerfesten Massen 3 - 25 Gew.-% Kohle, Koks oder Graphit in gemahlener Form. Daneben können die Massen geringe Mengen mineralische Öle, wie z. B. Anthracenöl, oder Schweröle als Gleitmittel enthalten.

Die Massen sind mehrere Monate lang lagerstabil. Sie sind im Temperaturbereich von 100 bis 180 °C einwandfrei homogen und gut plastisch verformbar, und sie erhärten sehr schnell bei Temperaturen oberhalb 200 °C.

Sie zeigen in der praktischen Anwendung einen hohen Verkokungsgrad, lassen sich ohne Schwierigkeiten verarbeiten und führen nicht zu Rauch-und Staubentwicklung.

Sie werden daher vorzugsweise als Verschlußmasse von Hochofenstichlöchern, als Stampfmasse zur Auskleidung von Rinnen und zum Ausflicken der feuerfesten Zustellung in Schmelzöfen verwendet.

Beispiele

Die nachfolgenden Beispiele sollen die Erfindung näher verdeutlichen.
In der Tabelle wurden folgende Abkürzungen benutzt:

DMT-Rückstand = Destillationsrückstand aus der Dimethylterephthalat-Herstellung

mittl. MG mit MV 1:0,6 = mittleres Molekulargewicht mit Molverhältnis 1:0,6

niedr. MG mit MV 1:0,4 = niedriges Molekulargewicht mit Molverhältnis 1:0,4

DEG = Diethylenglykol

DBP = Dibutylphthalat

Die Massen werden im Hochofenbetrieb eingesetzt bzw. praxisnahen Prüfungen unterzogen und in ihrem Verhalten beurteilt, wobei die folgenden Kriterien und Benotungen herangezogen werden:

1) Rauchentwicklung

Note 1 : kein Rauch
Note 2 : geringe Rauchentwicklung
Note 3 : mäßige Rauchentwicklung
Note 4 : starke Rauchentwicklung
Note 5 : sehr starke (störende) Rauchentwicklung

2) Stauben

Note 1 : kein Stauben
Note 2 : geringes Stauben
Note 3 : mäßiges Stauben
Note 4 : starkes Stauben
Note 5 : Stauben nicht ertragbar

3) Kaltdruckfestigkeit (vom verkokten Formkörper) gemessen in N/mm²

Wie die nachfolgende tabellarische Aufstellung zeigt, genügen die in den Beispielen beschriebenen Massen in ihren Eigenschaften den Anforderungen der Betriebe, da diese sich ohne Schwierigkeiten verarbeiten lassen, zu keiner wesentlichen Rauch-und Staubentwicklung führen und infolge des hohen Verkokungsgrades einen einwandfreien Aufbau des Stichlochkanals ermöglichen, der ohne Schwierigkeiten wieder aufgebohrt werden kann.

3

## Beispiele für Stichlochmassen

| Beispiel Nr. | 1 | 2 | 3 | 4 | 5 | 6 | 7 | 8 | 9 | 10 |
|---|---|---|---|---|---|---|---|---|---|---|
| Korund $Al_2O_3$ | 30 | 30 | 30 | 30 | 30 | 30 | 30 | 30 | 30 | - |
| Siliciumcarbid SiC | 20 | 20 | 20 | 20 | 20 | 20 | 20 | 20 | 20 | - |
| Ton | 15 | 15 | 15 | 15 | 15 | 15 | 15 | 15 | 10 | - |
| Magnesia | - | - | - | - | - | - | - | - | - | 60 |
| Kohle/Koks | 15 | 15 | 15 | 15 | 15 | 15 | 15 | 15 | 25 | 20 |
| Phenolnovolak | | | | | | | | | | |
| mittl. MG mit MV 1:0,6 | 5 | 5 | 5 | - | - | - | - | - | - | - |
| niedr. MG mit MV 1:0,4 | - | - | - | 5 | 7 | 7 | 8 | 8 | 5 | 5 |
| Lösemittel | | | | | | | | | | |
| DEG | 5 | 5 | 2 | 3 | 4 | 5 | 4 | 5 | 2 | 2 |
| DBP | - | - | 3 | 2 | 3 | 2 | 4 | 3 | 1 | 3 |
| natürliche Öle | | | | | | | | | | |
| Leinöl | 3 | - | - | - | - | 3 | - | - | - | - |
| Sojaöl | 3 | - | 2 | - | - | - | - | - | - | 2 |
| Ricinusöl | - | 2 | - | 2 | 1 | - | 2 | - | 2 | - |
| Cashewnuß-Schalenöl | 4 | 5 | 4 | 5 | 3 | 3 | 2 | 2 | 4 | 4 |
| Gleitmittel | | | | | | | | | | |
| Anthracenöl | - | 3 | 4 | 3 | 2 | - | - | 2 | 1 | 4 |
| Beurteilung | | | | | | | | | | |
| Rauchentwicklung (Note) | 1 | 2 | 3 | 2 | 1 | 1 | 1 | 2 | 2 | 3 |
| Staubentwicklung (Note) | 2 | 1 | 2 | 1 | 2 | 1 | 1 | 3 | 1 | 1 |
| Kaltdruckfestigkeit nach Verkoken N/mm² | 6,2 | 6,5 | 6,0 | 6,5 | 8,0 | 8,0 | 10,0 | 10,0 | 7,5 | 7,2 |

0 269 788

## Beispiele für Stichlochmassen

| | 11 | 12 | 13 | 14 | 15 | 16 | 17 | 18 | Vergleichs-beispiele 19 | 20 |
|---|---|---|---|---|---|---|---|---|---|---|
| Beispiel Nr. | 11 | 12 | 13 | 14 | 15 | 16 | 17 | 18 | 19 | 20 |
| Korund $Al_2O_3$ | 30 | 30 | 30 | 30 | - | 30 | 30 | 30 | 30 | - |
| Siliciumcarbid SiC | 20 | 20 | 20 | 20 | - | 25 | 20 | 20 | 20 | - |
| Ton | 16 | 16 | 16 | 10 | - | 15 | 15 | 15 | 16 | - |
| Magnesia | - | - | - | - | 60 | - | - | - | - | 60 |
| Kohle/Koks | 20 | 20 | 20 | 25 | 20 | 15 | 15 | 15 | 20 | 20 |
| DMT-Rückstand | - | - | - | - | - | 4 | 4 | 3 | - | - |
| Phenolnovolak mittl. MG mit MV 1:0,6 | - | - | - | - | - | - | - | - | - | - |
| niedr. MG mit MV 1:0,4 | 4 | 5 | 7 | 8 | 8 | 4 | 3 | 4 | - | - |
| Teerpech | - | - | - | - | - | - | - | - | 15 | 20 |
| Lösemittel DEG | 3 | 3 | 4 | - | - | - | 3 | 3 | - | - |
| DBP | - | 2 | - | - | - | - | - | - | - | - |
| natürliche Öle Ricinusöl | 2 | 2 | - | 2 | 3 | 2 | 2 | 3 | - | - |
| Cashewnuß-Schalenöl | 3 | 2 | 2 | 4 | 5 | 4 | 5 | 4 | - | - |
| Gleitmittel Anthracenöl | 2 | - | 1 | 1 | 4 | 1 | 3 | 3 | 10 | 15 |
| Beurteilung Rauchentwicklung (Note) | 2 | 1 | 1 | 2 | 2 | 1 | 1 | 1 | 5 | 5 |
| Staubentwicklung (Note) | 1 | 2 | 1 | 1 | 1 | 1 | 1 | 1 | 4 | 5 |
| Kaltdruckfestigkeit nach Verkoken N/mm² | 5,2 | 6,3 | 8,0 | 10,0 | 10,0 | 5,5 | 3,5 | 5,2 | 1,0 | 2,3 |

## Ansprüche

1. Ungeformte, feuerfeste Massen, die mineralische Füllstoffe, Kohle oder Koks, organische Lösemittel, Reaktionsharz und Plastifizierungsmittel enthalten können, dadurch gekennzeichnet, daß sie als Bindemittel ein Gemisch aus einem Novolak und einem oder mehreren hitzereaktiven natürlichen Ölen enthalten.

2. Ungeformte, feuerfeste Massen nach Anspruch 1, dadurch gekennzeichnet, daß sie als hitzereaktives Öl Cashewnuß-Schalenöl alleine oder im Gemisch mit anderen hitzereaktiven Ölen enthalten.

3. Ungeformte, feuerfeste Massen nach den Ansprüchen 1 und 2, dadurch gekennzeichnet, daß sie keine zusätzlichen Härtungsmittel enthalten.

4. Ungeformte, feuerfeste Massen nach den Ansprüchen 1 bis 3, dadurch gekennzeichnet, daß der Phenolnovolak mit einem molaren Phenol-Aldehyd-Verhältnis von 1 : 0,2 bis 1 : 1,0 hergestellt wurde.

5. Ungeformte, feuerfeste Massen nach den Ansprüchen 1 bis 3, dadurch gekennzeichnet, daß der Phenolnovolak mit einem molaren Phenol-Aldehyd-Verhältnis von 1 : 0,2 bis 1 : 0,5 hergestellt wurde.

6. Ungeformte, feuerfeste Massen nach Anspruch 5, dadurch gekennzeichnet, daß sie lösemittelfrei sind.

7. Ungeformte, feuerfeste Massen nach den Ansprüchen 1 bis 5, dadurch gekennzeichnet, daß sie Lösemittel enthalten, deren Siedepunkt oberhalb 200 °C liegt.

8. Ungeformte, feuerfeste Massen nach den Ansprüchen 1 bis 7, dadurch gekennzeichnet, daß sie als weitere Bindemittelkomponente auch Destillations-und/oder Oxidationsrückstände aus der Dimethylterephthalat-Herstellung enthalten.

9. Ungeformte, feuerfeste Massen nach den Ansprüchen 1 bis 8, dadurch gekennzeichnet, daß der Novolak bis zu 80 % durch Destillations-und/oder Oxidationsrückständen aus der Dimethylterephthalat-Herstellung ersetzt wird.

10. Verwendung von feuerfesten Massen gemäß der Ansprüche 1 bis 9 als Verschlußmasse von Hochofenstichlöchern, als Stampfmasse zur Auskleidung von Rinnen und als Flickmasse für die feuerfeste Zustellung von Schmelzöfen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-2 424 936 (TERRAC)<br>* Anspruch 1, Spalte 5, Zeilen 13-16 *<br>--- | 1 | C 21 B 7/12 |
| A | DE-A-2 626 791 (TERRAC)<br>* Seite 18 *<br>--- | 1 | |
| A | US-A-4 379 866 (HENRY et al.)<br>* Anspruch 8 *<br>--- | 1 | |
| A | DE-B-2 624 288 (NIPPON STEEL)<br>--- | | |
| A,D | DE-C-2 723 792 (RÜTGERSWERKE)<br>----- | | |

**RECHERCHIERTE SACHGEBIETE (Int. Cl.4)**

C 21 B 7/12

Der vorliegende Recherchenbericht wurde für alle Patentansprüche erstellt

| Recherchenort | Abschlußdatum der Recherche | Prüfer |
|---|---|---|
| BERLIN | 26-01-1988 | SUTOR W |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
.........................................................................
& : Mitglied der gleichen Patentfamilie, übereinstimmendes Dokument

EPO FORM 1503 03.82 (P0403)